# EUROPÄISCHE PATENTSCHRIFT

(11) **EP 2 063 159 B1**
(45) Veröffentlichungstag und Bekanntmachung des Hinweises auf die Patenterteilung: **29.09.2010**
(21) Anmeldenummer: 07022710.3
(22) Anmeldetag: 22.11.2007
(51) Int. Cl.: F16K 27/00

(54) **Hydraulik-Ventilbatterie**
Hydraulic valve manifold
Batterie de soupapes hydrauliques

(43) Veröffentlichungstag der Anmeldung: 27.05.2009
(73) Patentinhaber: HAWE Hydraulik SE, 81673 München (DE)
(72) Erfinder: Heusser, Martin, Dipl.-Ing., 81245 München (DE); Scheubert, Peter, Dr., 85653 Aying (DE)
(74) Vertreter: Grünecker, Kinkeldey, Stockmair & Schwanhäusser Anwaltssozietät

(56) Entgegenhaltungen:
- DE-A1- 19 931 340
- DE-A1- 19 937 974
- DE-U1- 9 411 196
- US-A1- 2003 029 510

## Beschreibung

Die Erfindung betrifft eine Hydraulik-Ventilbatterie gemäß Oberbegriff des Patentanspruchs 1.

Aus dem nächstliegenden Stand des Technik DE-A-199 37 974 ist eine Ventilbatterie bekannt, in welcher Aktorik-Magneten in Blockhohlräumen untergebracht und mit Kabeln verbunden sind. In jeder Ventilsektion verlaufen die Kabel von einem Aktorik-Magneten zu einer Montageseite der Ventilsektion. An den Montageseiten aller Ventilsektionen ist ein gemeinsamer, zweiteiliger Verteilerblock montiert, zwischen dessen Teilen zwei durchgehende Flachbandkabel in Positionierhohlräumen installiert sind. Von den Flachbandkabeln, die z.B. in ein Bussystem eingegliedert sind, erstrecken sich kurze Verbindungskabel zu einer Montageseite des Verteilerblocks. Dort sind als Steckkontakte ausgebildete Kontaktmittel platziert, die die Kabel der Ventilsektion und die Verbindungskabel verbinden. Die Flachbandkabel sind ihrerseits mit einer elektronischen Steuereinrichtung bzw. einem Signalverteiler verbunden.

Aus DE-U-94 11 196 ist eine Verbindungsklemme zum Herstellen einer sowohl mechanischen als auch elektrischen Verbindung zwischen mehreren mehradrigen Leitungen mit isolierten Adern bekannt. Hierfür werden Kontaktelemente eingebracht, die der Durchdringtechnik oder Schneidklemmtechnik entsprechende Kontaktierungsbereiche aufweisen.

Bekannter Standard (z.B.: Instruktionen der Firma SAUER DANFOSS, 11/2005, "PVED-CC Series 4 for PVG 32", Nr. 157R9960, www.sauer-danfoss.com) von Hydraulik-Ventilbatterien ist es, die Verkabelung zur jeweiligen, in der Sektion enthaltenen Ventilelektronik mit Einzelkabeln zu gestalten, wobei die jeweilige, in der Sektion enthaltene Aktorik und/oder Sensorik mit Steckverbindern angeschlossen wird. Bei einer Ventilbatterie mit vier Sektionen liegen z.B. acht Steckverbindungen und entsprechend viele Kabelschlaufen vor. Nach einem Daisy-Chain-Verfahren werden die nebeneinander liegenden Sektionen jeweils über die Leistungs-Versorgungsschleifen und Signal-Kabelschleifen eines Buskabels (CAN Bus) verbunden. An jeder Sektion sind demzufolge zumindest zwei Steckverbinder anzubringen. Der Kostenaufwand für die Vorbereitung und Anbringung der vielen Kabelschleifen und Steckverbinder ist hoch. Schwerwiegend ist jedoch der Nachteil, dass die Steckverbinder relativ viel Platz benötigen, der speziell bei kleineren Bauformen kaum gegeben ist, was das Anbringen und Abnehmen der Steckverbinder erschwert. Außerdem besteht die Gefahr, dass beispielsweise auf dem Gebiet der Mobilhydraulik unter groben Einsatzbedingungen Steckverbinder und/oder Kabelschleifen zwischen den Steckverbindern beschädigt oder losgerissen werden.

Für Industrieanwendungen ist es in Innenräumen mit stationären Vorrichtungen üblich, Busleitungen als beispielsweise zweiadrige kodierte Kabel zu verlegen. Wenn es in solchen Fabrikationsstätten vor allem auf einen hohen Freiheitsgrad zu jederzeitigen Erweiterung oder Einschränkung oder Umgestaltung verknüpfter Vorrichtungen ankommt, so ist eine Ausführung der Verkabelung z.B. Beispiel in Form des sogenannten ASI Busystems etabliert (Informationsschrift NEXAN, SN 24017, vom 14.06.2007 "Energiebusleitung ASI mit Polyurethan-Mantel HI11Y-FL"). Ein vergleichbarer Standard wird bisher für Hydraulik-ventilbatterien aufgrund vollständig anderer Anforderungen und wegen des nicht unbedingt erforderlichen Freiheitsgrades für Umgestaltungen nicht verwendet, vermutlich auch deshalb, weil sich für Hydraulik-Ventilbatterien durchgesetzte Standards gut bewährten, und Befürchtungen und Vorurteile hinsichtlich der Sicherheitsrelevanz existierten.

Weiterer Stand der Technik ist bekannt aus US-A-2003/029510 und DE-A-199 31 340. Der Erfindung liegt die Aufgabe zugrunde, eine sicherheitsgerichtet ausgelegte Hydraulik-Ventilbatterie der eingangs genannten Art zu schaffen, die sich durch eine kostengünstige, platzsparende, zuverlässige und beschädigungsresistente Verkabelung auszeichnet. Die gestellte Aufgabe wird mit den Merkmalen des Anspruchs 1 gelöst.

Die direkt an den Sektionen montierten Ventilelektroniken sind busfähig und kommunizieren mit einer eventuell vorhandenen Steuerelektronik oder anderen Befehlsgebern über ein Buskabel, z.B. CAN-Bus). Die von der Ventilelektronik zum Betrieb benötigte Leistung wird gegebenenfalls über ein zweites Kabel bereitgestellt. Das bzw. beide Kabel durchlaufen die einzelnen Sektionen und sind mit der jeweiligen Ventilelektronik über die steckerlose Kontaktverbindung mittels wenigstens eines Kontaktdorns pro Kabelader verbunden. Es entfallen Steckverbinder und Kabelschleifen. Die Verkabelung kann bei gleich hohen Sektionen weitgehend geradlinig durchlaufen; sie lässt sich aber auch ähnlich den bekannten einzelnen Kabelschleifen und Steckverbindern bequem bei verschieden hohen und/oder breiten Sektionen ohne Vorbereitungsarbeiten installieren, da Niveauunterschiede zwischen den Ventilelektroniken und unterschiedliche Abstände zwischen den Ventilelektroniken durch die flexiblen ASI-Kabel ausgeglichen werden können. Die Verkabelung ist nicht mehr von außen angesetzt, sondern direkt in die Hydraulik-Ventilbatterie integriert und geschützt installiert, ist kostengünstig und benötigt wenig Platz. Die integrierte Installation erhöht die Zuverlässigkeit und Beschädigungsresistenz. Die Verkabelung ist sowohl für Stationärhydraulik als auch Mobilhydraulik gleichermaßen einsetzbar. Um die Hydraulik-Ventilbatterie sicherheitsgerichtet auszulegen, ist zumindest eine ausgewählte, sicherheitsrelevante Sektion mit einer busfähigen sicherheitsgerichteten Ansteuerelektronik versehen. Bei einer Fehlerkondition schaltet diese Sektion zur Schadensabwendung beispielsweise die Druckversorgung für die anderen Sektionen ab. Zusätzlich könnte in diese Ansteuerelektronik Funktionalität integriert sein, die auf Fehlerkonditionen im Bussystem oder von einer anderen Sektion gemeldete Abnormalitäten anspricht und die Abschaltung vornimmt.

Dabei weist die Kontaktverbindung einen auf ein Gehäuse der Ventilelektronik unter Kraftschluss aufbringbaren, das Kabel abdeckenden und anpressenden Deckel mit einer Positionieraufnahme für das oder die Kabel. Der zumindest eine Kompaktdorn steht quer zur Verlaufsrichtung des Kabels, z.B. vom Gehäuse, nach außen in die Positionieraufnahme des Deckels vor. Sobald das Kabel mittels des Deckels am Gehäuse angebracht wird, dringt der zumindest eine Kontaktdorn durch die Kabelisolierhülle bis in eine Ader ein, um den Kontakt herzustellen, wobei beim Herstellen der Kontaktverbindung das Kabel durch den Deckel und die Positionieraufnahme ordnungsgemäß positioniert wird. Der zumindest eine Kontaktdorn, vorzugsweise eine Kontaktdorngruppe mit einem vorbestimmten Dornbild, ist in wenigstens einem in einem Durchgang des Gehäuses der Ventilelektronik installierten Sockel untergebracht und mit wenigstens einer am Sockel montierten Platine der Ventilelektronik verbunden.

Es kann zweckmäßig sein, an den Gehäusen der Ventilelektroniken einzelne Deckel zu montieren. Die Deckel können aneinander anschließen, um das jeweilige Kabel durchgehend schützend abzudecken und gegebenenfalls abzudichten, oder können mit Zwischenabständen montiert sein. Alternativ könnte ein über mehrere Gehäuse durchgehender einzelner Deckel für mehrere oder alle Sektionen angebracht werden, oder können Kabel an einer oder beiden Seiten der Gehäuse der Ventilelektroniken mit Deckeln installiert sein, oder gegebenenfalls sogar unter den Gehäusen, die dann als Deckel fungieren.

Um es einem Anwender zu ermöglichen, die Einbindung der Hydraulik-Ventilbatterie anwendungsspezifisch und/oder individuell zu gestalten, kann es zweckmäßig sein, wenn zumindest ein Deckel einen z.B. quer zum Kabel orientierten Anschluss oder einen Steckverbinder aufweist. An dieser Stelle kann quer zur Verkabelung eine Verknüpfung vorgenommen werden, ohne Zwang, das durch die Ventilbatterie verlaufende Kabel an einer anderen Stelle öffnen zu müssen. Ein Steckverbinder könnte in diesem Fall auch direkt in Verlaufsrichtung des Kabels oder sogar direkt am Kabel angebracht werden. Beispielsweise könnte ein solcher Anschluss zur trennbaren Verbindung der Ventilbatterie mit einem restlichen Bus- und/oder Leistungsversorgungs-System dienen.

Besonders zweckmäßig ist jedes Kabel, Buskabel und Leistungsversorgungskabel, zweiadrig mit parallelen Adern und einer durchstechbaren Isolierhülle. Derartige Kabel sind als ASI-Buskabel in unterschiedlichen Spezifikationen handelsüblich und kostengünstig. Beispielsweise hat die Isolierhülle des ASI-Buskabels einen Trapezquerschnitt mit einer einer Ader zugeordneten Profilnase an einer Trapezschrägseite, wobei, zweckmäßig, die Positionieraufnahme des Deckels exakt mit dem Trapezquerschnitt, vorzugsweise einschließlich der Profilnase, ausgebildet ist, um das Kabel bei der Installation an der Ventilbatterie ordnungsgemäß und in der korrekten Lage relativ zu den Kontaktdornen zu positionieren. Es könnte alternativ auch ein anderes, beispielsweise mehradriges und gegebenenfalls nur einziges Flachbandkabel installiert werden.

Die Aktorik einer Sektion umfasst beispielsweise zumindest einen Betätigungsmagneten für ein zu bewegendes Element der Ventilsektion. Dies kann einfacher Schwarz/Weiß-Schaltmagnet, ein Proportionalmagnet oder ein Zwillings-Magnet sein. Die Sensorik umfasst wenigstens einen Sensor, und/oder einen Regler und/oder ein Messgerät und/oder einen Zähler, oder dgl., beispielsweise zum Überwachen und/oder Regeln einer korrekten Operation der Sektion. Dies könnte beispielsweise ein Wegaufnehmer für einen verstellbaren Ventilschieber sein, ein Durchflussmessgerät, ein Hubzähler, oder ein Überwachungskontakt, dessen Ansprechsignal in der Ventilelektronik direkt weiterverarbeitet wird.

Bei einer Ausführungsform sind die Sektionen Wegeventile in einzelnen quaderförmigen Blöcken oder Gruppenblöcken, oder sogar an einem durchgehenden Block. Eine Blockseite definiert eine Ventilbetätigungsseite, z.B. mit Handbetätigungshebeln. Die Gehäuse der Ventilelektroniken sind an der der Betätigungsseite entgegengesetzt liegenden Blockseite angeordnet. Das zumindest eine Kabel läuft an dieser Blockseite an den Gehäusen der Ventilelektroniken entlang.

Anhand der Zeichnung werden Ausführungsformen der Erfindung erläutert. Es zeigen:
- Fig. 1: eine Druntersicht einer Hydraulik-Ventilbatterie,
- Fig. 2: eine Seitenansicht zu Fig. 1,
- Fig. 3: einen Längsschnitt einer Sektion der Ventilbatterie,
- Fig. 4: einen Querschnitt eines Aktorik-Teils einer Sektion,
- Fig. 5: einen Querschnitt eines Elektronikteils einer Sektion, und
- Fig. 6: vergrößerten Schnitt zur Verdeutlichung der Verkabelung der Sektionen, ana- log zu Fig. 3.

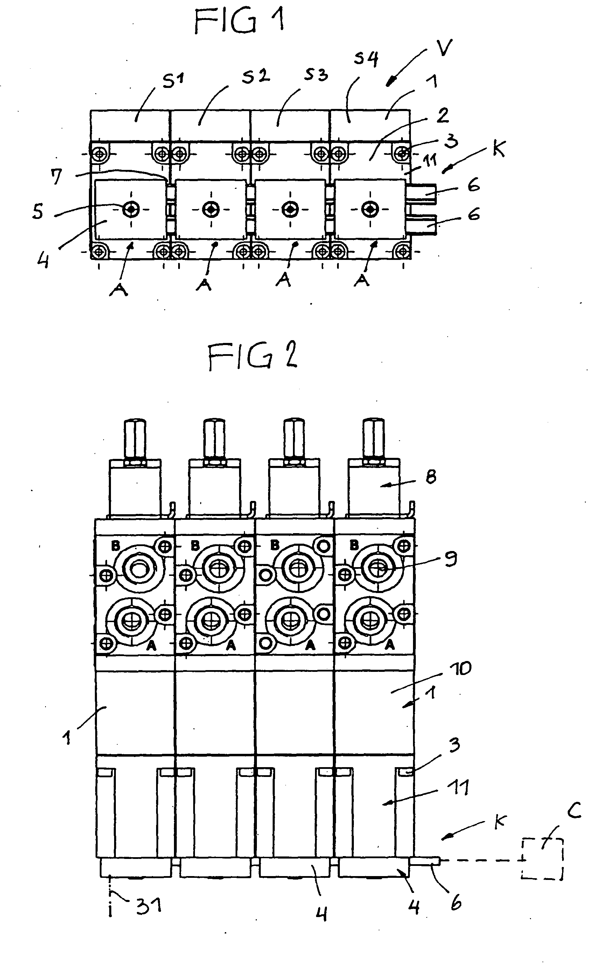

Die Fig. 1 bis 6 illustrieren eine Hydraulik-Ventilbatterie V aus beispielsweise vier Sektionen S1 - S4, beispielsweise Mehrwege-Schieberventilen, die auch zur fernsteuerbaren Betätigung und/oder Überwachung über eine Verkabelung K an eine Steuer- und/oder Versorgungseinrichtung C angeschlossen sein können oder werden können. Die Anzahl der Sektionen S1 - S4 ist nur beispielhaft; könnte jedoch auch größer oder kleiner als gezeigt sein. In der gezeigten Ausführungsform weist jede Sektion S1 - S4 einen quaderförmigen Block 1, z.B. aus Stahl, auf. Die Blöcke 1 sind in der Ventilbatterie V aneinandergefügt, so dass nicht gezeigte Strömungsdurchgänge zwischen den Blöcken vorliegen. Alternativ (nicht gezeigt) könnten in einem Gruppenblock mehrere Sektionen enthalten sein, oder könnte für alle Sektionen ein gemeinsamer Block 1 vorgesehen sein. Gezeigt sind in etwa gleich hohe Sektionen, obwohl die Höhen und/oder Breiten der Sektionen innerhalb der Ventilbatterie V auch variieren können.

An der in Fig. 1 in Blickrichtung gesehenen Blockseite 2 ist die Verkabelung K in Form zweier paralleler Kabel 6 vorgesehen, die in mit lösbaren Befestigungselementen 5, zumindest eines pro Sektion, kraftschlüssig festgelegten Deckeln 4 steckenose Kontaktverbindungen A umfasst. An der Blockseite 2 sind mit Befestigungselementen 3 Gehäuse 11 jeweils wenigstens einer nicht gezeigten Ventilelektronik festgelegt. Die Gehäuse 11 bestehen beispielsweise aus Druckguss oder einem anderen, mechanisch stabilen und thermisch leitfähigem Material. Die zwei Kabel 6 laufen in Längsrichtung der Ventilbatterie V unter den Deckeln 4 durch. Bei einer nicht gezeigten Alternative könnten die Deckel 4 zum besseren Schutz der Kabel 6 unmittelbar aneinander anschließen oder könnte ein einziger durchgehender Deckel 4 vorgesehen sein. Alternativ könnten die Kabel 6 an einer oder beiden Seiten der Gehäuse 11 installiert sein, oder gegebenenfalls unter den Gehäusen 11. Das zur Leistungsversorgung benutzte Kabel 6 (zwei Adern 26, Potential und Erdung) ist analog zu dem anderen Kabel 6 (zwei Signaladern, d.h. Signalleitungen eines Buskabels in einem Bussystem, z.B. CAN-Bus) verlegt, hat aber keinen Zusammenhang mit dem Bussystem.

Fig. 2 ist eine Draufsicht auf eine Anschlussseite 9 der Ventilbatterie V, wobei in den Blöcken 1 Gehäuse 10 auf eine nicht dargestellte Aktorik (zur aktiven Betätigung der Wegeschiebeventile) und an den Gehäusen 10 die Gehäuse 11 für die Ventilelektroniken angebracht sind. In Fig. 2 liegt die Betätigungsseite 8 der Ventilbatterie V oben, beispielsweise mit nicht näher hervorgehobenen Handhebeln, während die Verkabelung K unten eingegliedert ist.

Die Kabel 6 können beispielsweise zu einer Steuer- und/oder Versorgungseinrichtung C führen. Alternativ kann die Verkabelung K zunächst auch ohne Anschluss an eine weitere Einrichtung installiert sein. In zumindest einem Deckel 4 kann wenigstens 1, z.B. quer oder parallel zur Verlaufsrichtung der Kabel 6 mündender Auslass, Busknoten oder eine Steckverbinder-Aufnahme 31 vorgesehen sein, um alternativ oder additiv dort eine Anknüpfung herstellen zu können. Ein Steckverbinder (nicht gezeigt) könnte auch direkt am jeweiligen Kabel 6 angebracht werden, um, beispielsweise, eine anwenderspezifische Anbindung herzustellen.

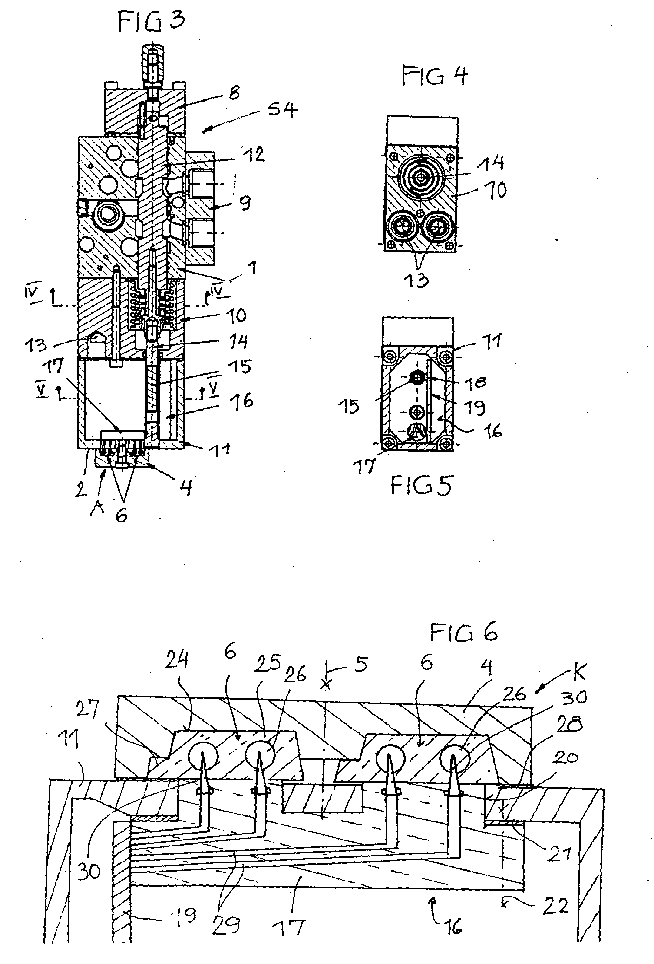

Fig. 3 ist ein Längsschnitt beispielsweise der Sektion S4 und zeigt einen im Block 1 verschiebbaren Kolbenschieber 12, der an der Betätigungsseite 8 gegebenenfalls manuell, und durch eine Aktorik 13, z.B. Zwillingsmagneten, verstellbar ist, die im Gehäuse 10 enthalten ist. Im am Gehäuse 10 montierten Gehäuse 11 ist die Ventilelektronik 16 enthalten. Die Deckel sind an der Blockseite 2 auf den Gehäusen 11 verschraubt und integrieren die Kabel 6 in die Ventilbatterie V. Mit dem Kolbenschieber 12 ist ein Verlängerungsteil 14 verbunden, der Teil einer Sensorik 15 ist, beispielsweise eines Wegaufnehmers mit einem Permanent-Stabmagneten. Die Sensorik 15 könnte alternativ aus einem LVDT oder inkrementellen Wegaufnehmer bestehen. Gegebenenfalls umfasst die Sensorik 15 einen Regler und/oder ein Messgerät und/oder einen Zähler, oder dergleichen. Mit der Sensorik 15, beispielsweise einem Wegaufnehmer, wird die korrekte Position des Wegeschieberventils überwacht und/oder geregelt. Im Gehäuse 11 ist ein Sockel 17 montiert, der zum Herstellen der Steckerlosen Kontaktverbindung A mit den Kabeln 6 benötigt wird. Anstelle, wie gezeigt, zweier Kabel 6, könnte auch ein einziges Kabel oder ein mehradriges Flachbandkabel installiert sein.

Im Querschnitt der Fig. 4 (Schnittebene IV-IV in Fig. 3) ist der Verlängerungsteil 14 des Schieberkolbens 12 (mit einer Federeinrichtung) im Gehäuse 10 erkennbar, sowie die hier Zwillingsmagneten aufweisende Aktorik 13.

Im Querschnitt in. Fig. 5 (Schnittebene V-V in Fig. 3) ist die am Verlängerungsteil 14 angeordnete Sensorik 15 (z.B. ein Wegaufnehmer) angedeutet, sowie eine Platine 19 der Ventilelektronik 16, an der beispielsweise ein Magnetfeldsensor oder ein anderer Positionssensor 18 angeordnet. Ferner sind in einer Öffnung 17 Kabel der Aktorik 13 erkennbar.

Der Schnitt in Fig. 6 verdeutlicht in größerem Maßstab die Ausbildung der steckerlosen Kontaktverbindung A zwischen der Ventilelektronik 16, einer Sektion und den Kabeln 6. Der Deckel 4 besitzt unterseitig wenigstens eine Positionieraufnahme 24 (in vorliegendem Fall zwei gleichartige Positionieraufnahmen 24), die im Querschnitt an den Querschnitt der Isolierhülle des Kabels 6 angepasst ist. Das Kabel 6 ist beispielsweise ein sogenanntes ASI-Buskabel mit zwei parallelen Adern 26 und der elastische Isolierhülle 25 aus durchstechbarern Material. Die Isolierhülle 25 hat in dieser Ausführungsform trapezförmigen Querschnitt mit einer einer Ader 26 zugeordneten Profilnase 27 an einer Trapezschrägseite. Die Positionieraufnahme 24 ist der Querschnittsform der Isolierhülle 25 exakt angepasst. Bei Verwendung eines anderen Kabels benötigt die Positionieraufnahme 24 einen anderen Querschnitt, um das Kabel exakt zu positionieren und positioniert gegen die Kontaktdome 30 anpressen zu können. Im Sockel 17 sind mehrere Kontaktdome 30 eingebettet, die über Leitungen 29 an die am Sockel 17 angebrachte Platine 19 angeschlossen sind. Die Kontaktdome 30 ragen über den Sockel 17 soweit bis in die Positionieraufnahme 24 vor, dass bei kraftschlüssigem Aufpressen des Deckels 4 mit positionierten Kabeln 6 die Kontaktdome 30 die Isolierhüllen 25 durchstechen und in die Adern 26 eindringen, um den Kontakt herzustellen. Zwischen dem Gehäuse 11 und dem Deckel 4 kann eine Dichtung 28 vorgesehen werden. Auch zwischen dem Sockel 17 und dem Gehäuse 11 kann eine Dichtung 21 vorgesehen sein. Es könnte auch für jedes Kabel 6 ein eigener Deckel 4 vorgesehen werden. Zweckmäßig wird, beispielsweise ohne zumindest die Dichtung 28, die Elastizität der Isolierhülle 25 des Kabels 6 benutzt, um über den Anpressdruck des Deckels 4 auch die erforderliche Dichtigkeit zu erzeugen.

In einer nicht gezeigten Alternative ist eine beispielsweise sichefieitsrelevante Sektion 8 z.B. ein Abschalt- oder Umlaufschieberventil) in oder an der Ventilbatterie V vorgesehen, die einem Notfall (Schaden im Bussystem, mechanischer Schaden in einer Sektion) zur Schadensabwendung ansprechen und eine Betätigung an die Ventilbatterie V angeschlossener Verbraucher verhindern soll. Hierfür ist, z.B., die Ventilelektronik 16 dieser Sektion entweder getrennt von den anderen verkabelt (Leistungsversorgung und Signalübertragung), oder, wie gezeigt, zwar in die Verkabelung K eingegliedert, jedoch mit einer zusätzlichen Ansteuerelektronik ausgestattet, die bei Meldung oder Feststellung einer Störungskondition die Druckabschaltung für die anderen Sektionen vornimmt.

In Fig. 6 sind die zwei Kabel 6 in den Positionieraufnahmen 24 gleichsinnig installiert, d.h. jede Profilnase 27 weist nach links. Monteure oder Kunden, welche die Kabel 6 montieren oder austauschen, oder eine Sektion austauschen, könnten somit die Kabel 6 versehentlich vertauschen, so dass beispielsweise der Versorgungsstrom die Ventilelektronik zerstören könnte. Um dies zu verhindern, werden bei einer nicht gezeigten Alternative die beiden Positionieraufnahmen 24 des Deckels 4 von Fig. 6 spiegelbildlich angeordnet und die beiden Kabel 6 auch so installiert, dass bei beiden Kabeln 6 die Profilnasen 27 zueinander weisen. Im Falle eines einzigen Kabels (nicht gezeigt), das Adern 26 für die Leistungsversorgung und Adern für die Kommunikation enthält, wird dieses zweckmäßig wie auch die einzige Positionieraufnahme 24 mit asymmetrischem Querschnitt ausgebildet, um eine einzige und korrekte Installationslage des Kabels zu erzwingen.

## Patentansprüche

1. Hydraulik-Ventilbatterie (V), mit mehreren, modular gefügten Ventilsektionen (S1 - S4), von denen zumindest einige wenigstens eine elektrische Aktorik (13) und/oder Sensorik (15) enthalten, die über eine Verkabelung (K) in einem Bussystem an eine Versorgungs- und/oder Steuereinheit (C) angeschlossen sind, wobei die Verkabelung (K) wenigstens ein über Gehäuse (11) der Ventilsektionen (S1 - S4) durchgehend hinweg verlaufendes Kabel (6) aufweist und zwischen dem Kabel (6) und der jeweiligen Aktorik (13) und/oder Sensorik (15) wenigstens eine Kontaktverbindung vorgesehen ist, **dadurch gekennzeichnet, dass** zwischen dem Kabel (6) und jeweils einer Ventilelektronik (16) wenigstens einer Aktorik (13) und/oder Sensorik (15) einer jeweiligen Ventilsektion eine steckerlose Kontaktverbindung (A) mit wenigstens einem kraftschlüssig in das Kabel (6) eingepressten Kontaktdorn (30) pro Ader (26) des Kabels (6) vorgesehen ist, und dass eine ausgewählte sicherheitsrelevante Ventilsektion (S1 - S4) der Hydraulik-Ventilbatterie (V) an das Kabel (6) angeschlossen und mit einer busfähigen sicherheitsgerichteten Abschalt-Ansteuerelektronik versehen ist, mittels derer bei einer festgestellten Fehlerkondition einer anderen Ventilsektion und/oder im Bussystem eine die anderen Ventilsektionen umfassende Abschaltung zur Schadensabwendung von der Ventilbatterie bzw. davon gesteuerten Hydroverbrauchern vornehmbar ist.

2. Hydraulik-Ventilbatterie gemäß Anspruch 1, **dadurch gekennzeichnet, dass** die Kontaktverbindung (A) einen das Kabel (6) abdeckenden, auf das Gehäuse (11) der Ventilelektronik (16) mit Kraftschluss und Anpressung aufbringbaren Deckel (4) mit einer Positionieraufnahme (24) für das Kabel (6) aufweist, und dass der zumindest eine Kontaktdorn (30) in wenigstens einem in einem Durchgang (20) des Gehäuses (11) der Ventilelektronik (16) installierten Sockel angeordnet ist und vom Gehäuse (11) quer zur Verlaufsrichtung des Kabels (6) nach außen in die Positionieraufnahme (24) vorsteht und im Gehäuse (11) an wenigstens eine am Sockel (17) angebrachte Platine (19) der Ventilelektronik (16) angeschlossen ist.

3. Hydraulik-Ventilbatterie gemäß Anspruch 1, **dadurch gekennzeichnet, dass** an den Gehäusen (11) der Ventilelektronik (16) einzelne beabstandete oder abdichtend aneinander
anschließende Deckel (4) oder ein über mehrere Gehäuse (11) durchgehender Deckel (4) angebracht ist bzw. sind.

4. Hydraulik-Ventilbatterie gemäß Anspruch 1, **dadurch gekennzeichnet, dass** zumindest ein Deckel (4) einen Anschluss oder einen Steckverbinder (31) aufweist, oder dass direkt an einem Kabel (6), vorzugsweise außerhalb des Deckels (4), ein Steckverbinder angebracht ist.

5. Hydraulik-Ventilbatterie gemäß Anspruch 1, **dadurch gekennzeichnet, dass** das jeweilige Kabel (6) ein flachbandartiges, zweiadriges ASI-Buskabel mit zwei parallelen Adern (26) und einer durchstechbaren, elastischen Isolierhülle (25) ist, und dass die Isolierhülle (25) einen Trapezquerschnitt mit einer einer Ader (26) zugeordneten Profilnase (27) an einer Trapezschrägseite aufweist, wobei die Positionieraufnahme (24) des Deckels (4) mit dem Trapezquerschnitt, vorzugsweise einschließlich der Profilnase (27), der Isolierhülle (25) ausgebildet ist.

6. Hydraulik-Ventilbatterie gemäß wenigstens einem der vorhergehenden Ansprüche, **dadurch gekennzeichnet, dass** zwei Kabel (6) längs aneinander anliegend oder beabstandet installiert sind, vorzugsweise ein Kabel zur Stromversorgung und ein Buskabel, vorzugsweise ein CAN-Buskabel, zur Kommunikation.

7. Hydraulik-Ventilbatterie gemäß Anspruch 1, **dadurch gekennzeichnet, dass** die an das Kabel (6) angeschlossene Aktorik (13) wenigstens einen Betätigungsmagneten aufweist.

8. Hydraulik-Ventilbatterie gemäß Anspruch 1, **dadurch gekennzeichnet, dass** die Sensorik (15) wenigstens einen Sensor und/oder ein Messgerät und/oder einen Zähler und/oder einen Überwachungskontakt aufweist.

9. Hydraulik-Ventilbatterie gemäß wenigstens einem der vorhergehenden Ansprüche, **dadurch gekennzeichnet, dass** die Sektionen (S1 bis S4) Wegeventile in einzelnen quaderförmigen Blöcken (1) oder Gruppenblöcken oder einem gemeinsamen Block sind, dass eine Blockseite eine Betätigungsseite (8) definiert, dass das jeweilige Ventilelektronik-Gehäuse (11) an der der Betätigungsseite (8) entgegengesetzt liegenden Blockseite (2) angeordnet ist, und dass das zumindest eine Kabel (6) an der Blockseite (2) in Blocklängsrichtung entlang der Ventilelektronik-Gehäuse (11) verläuft und mit den steckerlosen Kontaktverbindungen (A) mit den Ventilelektroniken (16) galvanisch verbunden ist.

## Claims

1. Hydraulic valve manifold (V), comprising several valve sections (S1 to S4) which are joined in modular fashion, of which valve sections (S1 to S4) at least several contain at least an electric actuator arrangement (13) and/or sensor arrangement (15), which arrangements are connected via a cabling (K) in a bus system with a supplying and/or controlling unit (C), the cabling (K) comprising at least one cable (6) extending continuously over at least one housing (11) of the valve sections (S1 to S4), and at least one contacting connection between the cable (6) and the respective actuator arrangement (13) and/or the sensor arrangement (15), **characterised in that** a plug-free contacting connection (A) is provided between the cable (6) and a respective valve electronic arrangement (16) of at least one actuator arrangement (13) and/or sensor arrangement (15) of a respective valve section, the plug-free contacting connection (A) having at least one contact thorn (30) per line (26) of the cable (6) which contact thorn (20) is pressed with a force-fit into the cable (6), and that a selected valve section (S1 to S4) which is a valve section relevant for safety of the hydraulic valve manifold (V) is connected to the cable (6) and is provided with a safety oriented switching-off control electronics adapted for communication with the bus, by means of which switching-off control electronics in case of a determined error condition of another valve section and/or within the bus system the other valve sections can be switched off in order to avoid damage at the hydraulic valve manifold (V) or at either consumers controlled by the hydraulic valve manifold (V).

2. Hydraulic valve manifold according to claim 1, **characterised in that** the contacting connection (A) comprises a cover lid (4) having a positioning socket (24) for the cable (6), the cover lid (4) covering the cable (6) and being brought on the housing (11) of the valve electronics (16) by a force-fit and by pressure, and that the at least one contact thorn (30) is arranged in a boss installed in a passage (20) of the housing (11) of the valve electronics (16), the contact thorn (30) protruding from the housing (11) crosswise to the extension direction of the cable (6) outwardly into the positioning socket (24) and being connected in the housing (11) to at least one circuit board (19) of the valve electronic s(16) which circuit board (19) is attached to the boss (17).

3. Hydraulic valve manifold according to claim 1, **characterised in that** single spaced apart or sealingly mutually continuing cover lids (4) are attached to the housing (11) of the valve electronics (16), or that a cover lid (4) extending over several housings (11) is provided at the housing (11).

4. Hydraulic valve manifold according to claim 1, **characterised in that** at least one cover lid (4) is provided with a connection or a plug-in connector (31), or that directly at one cable (6), preferably outside of the cover lid (4), a plug-in connector is provided.

5. Hydraulic valve manifold according to claim 1, **characterised in that** the respective cable (6) is a flat band-like, dual line ASI bus cable having two parallel lines (26) and a penetrateable elastic insulation cover (235), and that the insulation cover (25) has a trapezoidal cross-section with a profile nose (27) associated to one line (26) at an inclined slide of the trapezoidal cross-section, the positioning socket (24) of the cover lid (4) being formed with the same trapezoidal cross-section, preferably including the profiled nose (27) of the insulating cover (25).

6. Hydraulic valve manifold according to at least one of the preceding claims, **characterised in that** two cables (6) are installed such that they abut longitudinally on each other or are spaced apart, preferably one cable for power supply and a bus cable, preferably a CAN bus cable, for communication.

7. Hydraulic valve manifold according to claim 1, **characterised in that** the actuator assembly (13) which is connected to the cable (6) comprising at least one actuating solenoid.

8. Hydraulic valve manifold according to claim 1, **characterised in that** the sensor arrangement (15) comprises at least one sensor and/or a measuring device and/or a counter end or a monitoring contact.

9. Hydraulic valve manifold according to at least one of the preceding claims, **characterised in that** the valve sections (S1 to S4) are multi-way valves in single cuboid-shaped blocks (1) or in group blocks or in a common block, that one block side defines an actuation side (8), that the respective valve electronic housing (11) is arranged at a block side (2) opposite to the actuation side (8), and that the at least one cable (6) extends at the block side (2) in longitudinal direction of the block along the valve electronic housing (11) and is galvanically connected with the plug-free contacting connections (A) and the valve electronics (16).

## Revendications

1. Batterie de soupapes hydrauliques (V), comprenant plusieurs sections de soupapes (S1 - S4) assemblées de façon modulaire, dont au moins quelques-unes comportent au moins un actionneur (13) et/ou un capteur (15) électriques, reliées par un câblage (K) dans un système de bus à une unité d'alimentation et/ou de commande (C), le câblage (K) présentant au moins un câble (6), qui s'étend en continu par-dessus le corps (11) des sections de soupapes (S1 - S4), et au moins une jonction de contact étant prévue entre le câble (6) et l'actionneur (13) et/ou le capteur (15) respectifs, **caractérisée en ce que**, entre le câble (6) et respectivement une électronique de soupapes (16) d'au moins un actionneur (13) et/ou d'un détecteur (15) d'une section de soupape respective, il est prévu une jonction de contact sans fiche (A) avec au moins une pointe de contact (30) par, fil (26) du câble (6), sertie par adhérence dans le câble (6), et qu'une section de soupape (S1 - S4) sélectionnée, importante pour la sécurité, de la batterie de soupapes hydrauliques (V) est raccordée au câble (6) et munie d'une électronique de commande - coupure visant la sécurité raccordable à un bus, au moyen de laquelle, en présence d'une condition d'erreur détectée d'une autre section de soupape et/ou dans le système de bus, une coupure englobant les autres sections de soupapes peut être assurée pour éviter des dommages de la batterie de soupapes et/ou de récepteurs hydrauliques commandés par cette dernière.

2. Batterie de soupapes hydrauliques suivant la revendication 1, **caractérisée en ce que** la jonction de contact (A) présente un couvercle (4), qui recouvre le câble (6) et peut être appliqué sur le corps (11) de l'électronique de soupapes (16) par adhérence et par pression, avec un logement de positionnement (24) pour le câble (6), et **en ce que** la au moins une pointe de contact (30) est disposée dans au moins un socle, installé dans un passage (20) du corps (11) de l'électronique de soupapes (16), dépasse vers l'extérieur du corps (11), transversalement à la direction définie par le câble (6), dans le logement de positionnement (24), et est reliée dans le corps (11) à au moins une platine (19), montée sur le socle (17), de l'électronique de soupapes (16).

3. Batterie de soupapes hydrauliques suivant la revendication 1, **caractérisée en ce que** des couvercles (4) individuels, distants ou se raccordant les uns aux autres de façon étanche, ou un couvercle (4) continu sur plusieurs corps (11), est et/ou sont monté/s sur les corps (11) de l'électronique de soupapes (16).

4. Batterie de soupapes hydrauliques suivant la revendication 1, **caractérisée en ce qu'**au moins un couvercle (4) présente un raccord ou un connecteur à fiches (31), ou en ce qu'un connecteur à fiches est monté directement sur un câble (6), de préférence à l'extérieur du couvercle (4).

5. Batterie de soupapes hydrauliques suivant la revendication 1, **caractérisée en ce que** le câble (6) respectif est un câble de bus ASI plat à deux fils avec deux fils parallèles (26) et une gaine isolante (25) élastique, pouvant être transpercée, et **en ce que** la gaine isolante (25) présente une section transversale trapézoïdale avec un bord avant (27), associé à un fil (26), sur un côté oblique du trapèze, le logement de positionnement (24) du couvercle (4) étant réalisé par la section transversale trapézoïdale, de préférence y compris le bord avant (27), de la gaine isolante (25).

6. Batterie de soupapes hydrauliques suivant l'une au moins des revendications précédentes, **caractérisée en ce que** deux câbles (6) sont installés en s'appliquant le long l'un de l'autre ou à distance, de préférence un câble pour l'alimentation en courant et un câble de bus, de préférence un câble de bus CAN, pour la communication.

7. Batterie de soupapes hydrauliques suivant la revendication 1, **caractérisée en ce que** l'actionneur (13), relié au câble (6), présente au moins un aimant de commande.

8. Batterie de soupapes hydrauliques suivant la revendication 1, **caractérisée en ce que** le capteur (15) présente au moins un capteur et/ou un appareil de mesure et/ou un compteur et/ou un contact de contrôle.

9. Batterie de soupapes hydrauliques suivant l'une au moins des revendications précédentes, **caractérisée en ce que** les sections (S1 à S4) sont des distributeurs dans des blocs parallélépipédiques (1) individuels ou dans des blocs de groupe ou dans un bloc commun, **en ce qu'**un côté de bloc définit un côté de commande (8), **en ce que** le corps (11) respectif de la partie électronique de soupapes est disposé sur le côté de bloc (2) opposé au côté de commande (8), et **en ce que** le au moins un câble (6) s'étend sur le côté de bloc (2) dans la direction longitudinale le long du corps (11) de l'électronique de soupapes et est relié de manière galvanique aux électroniques de soupapes (16) par les jonctions de contact (A) sans fiche.
